# EUROPEAN PATENT APPLICATION

(11) **EP 4 420 779 A1**
(43) Date of publication of application: **28.08.2024**
(21) Application number: 22882760.6
(22) Date of filing: 14.10.2022
(51) Int. Cl.: B01J 27/16, B01J 29/70, B01J 29/40, B01J 35/02, B01J 35/10, B01J 37/00, C10G 11/05

(54) **CATALYTIC CRACKING CATALYST COMPRISING LARGE-PARTICLE-SIZE SOL AND APPLICATION THEREOF**

(30) Priority: 18.10.2021 CN 202111208517; 18.10.2021 CN 202111208155
(71) Applicant: China Petroleum & Chemical Corporation, Beijing 100728 (CN); Sinopec Research Institute of Petroleum Processing Co., Ltd., Beijing 100083 (CN)
(72) Inventor: YU, Shanqing, Beijing 100083 (CN); YAN, Jiasong, Beijing 100083 (CN); YUAN, Shuai, Beijing 100083 (CN); ZHANG, Jiexiao, Beijing 100083 (CN); LI, Jiaxing, Beijing 100083 (CN)
(74) Representative: Hoffmann Eitle
(86) International application number: PCT/CN2022/125358
(87) International publication number: WO 2023/066153

(57) **Abstract**

A catalytic cracking catalyst comprising a large-particle-size sol and a method for preparing the same. The catalytic cracking catalyst comprises, based on its total weight, 15-50 wt.% of beta zeolite, 10-75 wt.% of clay, and 10-50 wt.% of large-particle-size sol; the pore distribution is determined by a low-temperature nitrogen adsorption method, and the total pore volume is not less than 0.200 mL/g, wherein the pore volume of 4-50 nm mesopores accounts for more than 60% of the total pore volume; the large-particle-size sol comprises 10-40 wt.% of Al₂O₃, 50-85 wt.% of P₂O₅, and 0.2-10 wt.% of SiO₂, wherein the P₂O₅:Al₂O₃ mass ratio is (1.5-5.0): 1, and the SiO₂:Al₂O₃ mass ratio is (0.01-0.3): 1, and the average particle size of the sol is concentrated in the range of 20 to 50nm. The preparation method comprises: an aluminum source and deionized water are mixed to obtain a first slurry, the first slurry and a phosphorus source are mixed to obtain a second slurry, a silica sol is added into the second slurry to obtain a third slurry, the third slurry is subjected to aging treatment to obtain a large-particle-size sol. The large-particle-size sol is mixed uniformly with clay and beta zeolite to obtain a fourth slurry, which is spray dried and calcined. The catalyst is applied in the catalytic cracking process, and can significantly increase the yield and selectivity of C4 olefins.

## Description

### Technical Field

The present invention is in the field of refining industry. In particular, the present invention relates to a catalytic cracking catalyst comprising a large-particle-size sol and a method for preparing the same.

### Background Art

The transformation of oil refining into basic chemical feedstocks such as olefins and aromatics has become the mainstream of the industry, and catalytic cracking is one of the key technologies for maximizing the production of low-carbon olefins from crude oil. According to statistics, nearly 70% of C4 olefins worldwide comes from catalytic cracking units. As the technology of producing C4 olefin fractions with catalytic cracking units has the advantages of low investments and low costs, a great many of companies attempt to obtain a higher C4 olefin yield from the catalytic cracking process. The use of a catalytic cracking catalyst or a co-agent is the most direct and economical method to increase C4 olefin yield

The main active components of a catalytic cracking catalyst or a co-agent for increasing C4 olefin yield include Y-type molecular sieves, ZSM-5 molecular sieves, and beta zeolite, etc. Among the above components, beta zeolite is regarded as the main active component of a catalyst for increasing C4 olefin yield as it possesses both acid catalytic properties and structural selectivity thanks to its particular structure. A binder is also one of the main components of a catalytic cracking catalyst or co-agent which is capable of having synergistic action with active components to improve the activity and hydrothermal stability of the catalyst while ensuring the wear resistance of the catalyst. The most common binders include alumina sol, silica sol, acidified pseudo-boehmite, etc.

US6355591 discloses a catalytic cracking additive comprising 4 to 20 wt.% of aluminum phosphate, 1-40 wt.% of ZSM-5, Beta zeolite and mixtures thereof, and 40-90 wt.% of clay, capable of enhancing the yield of liquefied gas.

CN1055105C discloses a cracking catalyst for increasing the yield of isobutylene and isopentylene, which comprises 6-30 wt.% of five-membered ring high silica zeolite containing phosphorus and rare earth, 5-20 wt.% of USY zeolite, 1-5 wt.% of beta-zeolite, 30-60 wt.% of clay, and 15-30 wt.% of inorganic oxide. The catalyst is characterized by the capability in increasing the yield of isobutylene and isopentylene under conditions of a catalytic cracking process, and co-producing high-octane gasoline.

CN103785456A discloses a cracking co-agent for increasing low-carbon olefin concentration, comprising a modified beta molecular sieve, a phosphorus-aluminum inorganic binder containing first clay, and other inorganic binders and VIII group metal additives, with or without a second clay; the phosphorus-aluminum inorganic binder containing first clay comprises an aluminum component, a phosphorus component and first clay; the beta molecular sieve modified by phosphorus and transition metal comprises phosphorus (calculated as P₂O₅) in a content of 1-10 wt.% and metal (calculated as a metal oxide) in a content of 0.5-10 wt.%. The cracking catalyst composition is used in the catalytic cracking of petroleum hydrocarbons and can increase the yield of catalytically cracked liquefied gas, increase the concentration of low-carbon olefins in the liquefied gas, especially the concentration of isobutylene, while increasing the ratio of ethylene to dry gas and increasing the octane number of gasoline; the heavy oil conversion ability of the main catalyst will not be affected when a large proportion of co-agent is blended.

Although existing catalytic cracking catalyst or catalysts for increasing the production of low-carbon olefins can achieve the object of increasing the production of C4 olefins to certain extent, the following problems remain: the increase of the yield of C4 olefins mainly relies on the increase of the yield of liquefied gas, while the concentration of C4 olefins in liquefied gas does not vary significantly, and the selectivity of C4 olefins is low; the catalyst or catalysts lack rich mesoporous and macroporous structures, which is not conducive to the rapid diffusion of C4 olefins generated in the catalytic cracking process, and which leads continuous secondary reaction of low-carbon olefins such as C4 olefins, resulting in a decrease in the yield and selectivity of C4 olefins.

Therefore, in order to solve the above problem, the objective of the present invention is to provide a catalytic cracking catalyst/co-agent having rich mesoporous structures and a method for preparing the same so as to further increase the yield and selectivity of C4 olefins.

### Summary of the Invention

On the one hand, the present invention provides a large-particle-size sol comprising (on a dry basis) 10-40 wt.% Al₂O₃, 50-85 wt.% P₂O₅, and 0.2-10 wt.% SiO₂, wherein the P₂O₅:Al₂O₃ mass ratio is (1.5-5.0): 1, and the SiO₂:Al₂O₃ mass ratio is (0.01-0.3): 1, preferably (0.05-0.3): 1; the average particle size of the large-particle-size sol is in the range of 20-50 nm, for example, large-particle-size sol having an average particle size distribution ranging from 20 to 50 nm accounts for more than 60% of the total amount.

The present invention further provides a catalytic cracking catalyst comprising the large-particle-size sol for increasing the yield of low-carbon olefins, comprising (based on the dry weight of the catalytic cracking catalyst) 15-50 wt.% of beta zeolite and/or ZSM-5 zeolite, 10-75 wt.% of clay, and 10-50 wt.% of said large-particle-size sol. The pore distribution is determined by a low-temperature nitrogen adsorption method. The total pore volume of the catalytic cracking catalyst is not less than 0.200 mL/g, wherein the pore volume of mesopores having a pore size of 4-50 nm accounts for more than 60% of the total pore volume.

In one embodiment, the catalytic cracking catalyst according to the present invention can be used as a catalytic cracking co-agent.

In one embodiment, the catalytic cracking catalyst according to the present invention comprises 20-40 wt.% of beta zeolite, 20-65 wt.% of clay, and 15-45wt.% of large-particle-size sol.

In one embodiment, said catalytic cracking catalyst comprises 20-50 wt.% of ZSM-5 zeolite, 10-70 wt.% of clay, and 10-45 wt.% of large-particle-size sol.

In one embodiment, the catalytic cracking catalyst according to the present invention comprises 25-45 wt.% of ZSM-5 zeolite, 20-60 wt.% of clay, and 15-40 wt.% of large-particle-size sol.

In one embodiment, the large-particle-size sol comprises 15-35 wt.% of Al₂O₃, 55-80 wt.% of P₂O₅, and 0.5-8.0 wt.% of SiO₂, wherein the P₂O₅:Al₂O mass ratio is (2.0-4.5): 1, the SiO₂:Al₂O₃ mass ratio is (0.05-0.25): 1, and large-particle-size sol having an average particle size distribution ranging from 25-45nm accounts for more than 60% of the total amount.

In one embodiment, the total pore volume of the catalytic cracking catalyst is 0.200-0.300 mL/g.

In one embodiment, in the catalytic cracking catalyst according to the present invention, the pore volume of 4-50 nm mesopores accounts for 65-85% of the total pore volume.

In one embodiment, the beta zeolite is selected from the group consisting of H-type beta zeolite, Na-type beta zeolite, phosphorus-modified beta zeolite and metal modified beta zeolite or any combination thereof, wherein the molar ratio of SiO₂ to Al₂O₃ in the beta zeolite is 20-50.

In one embodiment, the beta zeolite is a H-type beta zeolite.

In one embodiment, the metal in the metal modified beta zeolite is selected from the group consisting of La, Ce, Pr, Zr, Ti, Fe, Cu, Mg.

In one embodiment, the ZSM-5 zeolite is selected from the group consisting of HZSM-5 zeolite, ZSM-5 zeolite comprising phosphorus and/or iron, ZSM-5 zeolite comprising phosphorus and/or rare earth, modified ZSM-5 zeolite or any combination thereof.

In one embodiment, the modified ZSM-5 zeolite is selected from the group consisting of Zn, Cu, Mg, Zr, Ti or B modified ZSM-5 zeolite.

In one embodiment, the clay is selected from the group consisting of kaolin, rectorite, diatomite, montmorillonite, bentonite, sepiolite or any combination thereof.

In another aspect, the present invention provides a method for the preparation of a catalytic cracking catalyst of the present invention, comprising the following steps:
(1) firstly, a large-particle-size sol is prepared in the following steps:
   (1a) an aluminum source and deionized water are mixed and stirred at room temperature for more than 30 minutes to obtain a first slurry, which has a solid content of 5-25 wt.%;
   (1b) the first slurry and a phosphorus source are mixed and stirred at a temperature not higher than 60 °C for more than 30 minutes to obtain a second slurry, which has a solid content of 15-50 wt.%;
   (1c) a silica sol is added into the second slurry, mixed and stirred at a temperature not higher than 60 °C for more than 30 minutes to obtain a third slurry, which has a solid content of 15-50 wt.%;
   (1d) the third slurry is set aside at 20 to 60 °C for 1-72 hours to carry out aging treatment to obtain the large-particle-size sol;
   wherein the mass ratio of the amount of the phosphorus source (calculated as P₂O₅) to that of the aluminum source is (1.5-5.0): 1, and the mass ratio of the amount of the silica sol (calculated as SiO₂) to that of the aluminum source (calculated as Al₂O₃) is (0.01-0.3): 1;
(2) then, clay, beta zeolite and the large-particle-size sol are mixed thoroughly and uniformly to obtain a fourth slurry,
   wherein the solid content of the resulting fourth slurry is 10-50 wt.%; the fourth slurry is sprayed to form, dried and calcined, to obtain said catalytic cracking catalyst, wherein on a dry basis, the weight ratio of the beta zeolite and/or ZSM-5 zeolite, the clay, and the large-particle-size sol is (15-50): (10-75): (10-50).

In one embodiment, on a dry basis, the weight ratio of the ZSM-5 zeolite, the clay, and large-particle-size sol is (20-50): (10-70): (10-45).

In one embodiment, according to the preparation method of the present invention, the mixing and stirring lasts for 30-60 minutes in step (1a),
In one embodiment, according to the preparation method of the present invention, step (1b) is carried out at a temperature of 35-55°C, and the mixing and stirring lasts for 30-90 minutes.

In one embodiment, according to the preparation method of the present invention, step (1c) is carried out at a temperature of 35-55°C, and the mixing and stirring lasts for 30-90 minutes.

In one embodiment, according to the preparation method of the present invention, the aluminum source is one or more selected from the group consisting of pseudo-boehmite, alumina, boehmite, gibbsite, and diaspore.

In one embodiment, according to the preparation method of the present invention, the phosphorus source is one or more selected from phosphoric acid, phosphorous acid, and hypophosphoric acid.

In one embodiment, according to the preparation method of the present invention, the clay is one or more selected from the group consisting of kaolin, rectorite, diatomite, montmorillonite, bentonite, and sepiolite.

In one embodiment, according to the preparation method of the present invention, the beta zeolite is selected from the group consisting of H-type beta zeolite, Na-type beta zeolite, phosphorus-modified beta zeolite and metal modified beta zeolite or any combination thereof, wherein the molar ratio of SiO₂ to Al₂O₃ in the beta zeolite is 20-50.

In one embodiment, according to the preparation method of the present invention, the ZSM-5 zeolite is selected from the group consisting of HZSM-5 zeolite, ZSM-5 zeolite comprising phosphorus and/or iron, ZSM-5 zeolite comprising phosphorus and/or rare earth, modified ZSM-5 zeolite or any combination thereof.

In one embodiment, according to the preparation method of the present invention, the modified ZSM-5 zeolite is selected from the group consisting of Zn, Cu, Mg, Zr, Ti or B modified ZSM-5 zeolite.

In another aspect, the present invention provides a large-particle-size sol comprising, based on its dry weight, 10-40 wt.% of Al₂O₃, 50-85 wt.% of P₂O₅, and 0.2-10 wt.% of SiO₂, wherein the P₂O₅:Al₂O₃ mass ratio is (1.5-5.0): 1, and the SiO₂:Al₂O₃ mass ratio is (0.01-0.3): 1, the average particle size being 20-50 nm, preferably it is prepared in the following method:
(1a) an aluminum source and deionized water are mixed and stirred at room temperature for more than 30 minutes to obtain a first slurry which has a solid content of 5-25 wt.%;
(1b) the first slurry and a phosphorus source are mixed and stirred at a temperature not higher than 60 °C for more than 30 minutes to obtain a second slurry which has a solid content of 15-50 wt.%;
(1c) a silica sol is added into the second slurry, mixed and stirred at a temperature not higher than 60 °C for more than 30 minutes to obtain a third slurry which has a solid content of 15-50 wt.%;
(1d) the third slurry is set aside at 20 to 60 °C for 1-72 hours to carry out aging treatment to obtain the large-particle-size sol.

The catalytic cracking catalyst prepared according to the method of the present invention, as above described, comprises a large-particle-size sol which has rich mesoporous structures formed by the accumulation of colloidal particles which have a larger and uniformly distributed particle size. Therefore, the use of the catalytic cracking catalyst comprising a large-particle-size sol according to the present invention in the catalytic cracking process results in a relatively high yield of low-carbon olefins. As low-carbon olefins can be quickly diffused through the rich mesoporous structures of the catalyst, a continuous secondary reaction can be avoided, which achieves an increase in the low-carbon olefin yield and selectivity. In addition, the large-particle-size sol comprised in the catalytic cracking catalyst of the present invention is distributed on the molecular sieves and clay, which can further improve the binding property, and improve the wear resistance, i.e., the strength, of the catalyst.

### Description of Figures

Fig.1 is a TEM image of the catalytic cracking catalyst A1 prepared according to Example 1.
Fig. 2 is a TEM image of the catalytic cracking catalyst DA3 prepared according to the Comparative Example 3.
Fig. 3 is a graph of the pore size distribution of the catalytic cracking catalyst prepared according to the Examples and Comparative Example 3.
Fig. 4 is a TEM image of the catalytic cracking catalyst ZA1 prepared according to Example Z1.
Fig. 5 is a graph of the pore size distribution of the catalytic cracking catalyst prepared according to Example Z2 and Comparative Example Z3.

### Detailed Description of the Invention

The following figures and examples are used to illustrate the present invention in detail. The characteristics and advantages of the present invention will become more clear through these illustrations.

In addition, the technical features involved in different embodiments of the present invention described below can be combined with each another as long as they do not conflict with each other.

In one aspect, the present invention provides a catalytic cracking catalyst for increasing the yield of low-carbon olefins, based on the dry weight of the catalytic cracking catalyst, which comprises 15-50 wt.% of beta zeolite, 10-75 wt.% of clay, 10-50 wt.% of large-particle-size sol comprising 10-40 wt.% of Al₂O₃, 50-85 wt.% of P₂O₅, and 0.2-10 wt.% of SiO₂, wherein the P₂O₅:Al₂O mass ratio is (1.5-5.0): 1, and the SiO₂:Al₂O₃ mass ratio is (0.01-0.3): 1; the large-particle-size sol having an average particle size distribution in the range of 20-50 nm accounts for more than 60% of the total amount; the pore distribution is determined by a low-temperature nitrogen adsorption method, the total pore volume of the catalytic cracking catalyst is not less than 0.200 mL/g, wherein the pore volume of 4-50 nm mesopores accounts for more than 60% of the total pore volume. This catalytic cracking catalyst has a significant effect on increasing the yield of C4 olefins.

The catalytic cracking catalyst according to the present invention preferably comprises 20-40 wt.% of beta zeolite, 20-65 wt.% of clay, and 15-45 wt.% of large-particle-size sol. The large-particle-size sol preferably comprises 15-35 wt.% of Al₂O₃, 55-80 wt.% of P₂O₅, and 0.5-8.0 wt.% of SiO₂, wherein the P₂O₅:Al₂O mass ratio is preferably (2.0-4.5): 1, and the SiO₂: Al₂O₃ mass ratio is preferably (0.05-0.25): 1. The large-particle-size sol having an average particle size distribution in the range of 25-45nm can account for over 60% of the total amount. The total pore volume of the catalytic cracking catalyst according to the present invention can reach 0.200-0.300 mL/g, wherein the pore volume of 4-50 nm mesopores accounts for 65-85% of the total pore volume.

The beta zeolite comprised in the catalytic cracking catalyst of the present invention is selected from the group consisting of H-type beta zeolite, Na-type beta zeolite, phosphorus-modified beta zeolite and metal modified beta zeolite or any combination thereof, preferably H-type beta zeolite. The metal in the metal modified beta zeolite comprised in the catalytic cracking catalyst of the present invention can be, for example, a rare earth metal etc. for example selected from the group consisting of La, Ce, Pr, Zr, Ti, Fe, Cu, Mg. The clay comprised in the catalytic cracking catalyst of the present invention can be various clays suitable for catalyst preparation well-known to those skilled in the art, for example, selected from the group consisting of kaolin, rectorite, diatomite, montmorillonite, bentonite, sepiolite or any combination thereof.

In a second aspect, the present invention provides a catalytic cracking catalyst for increasing the yield of low-carbon olefins; based on the dry weight of the catalytic cracking catalyst, the catalytic cracking catalyst comprises 20-50 wt.% of ZSM-5 zeolite, 10-70 wt.% of clay, 10-45 wt.% of large-particle-size sol; the large-particle-size sol comprises 10-40 wt.% of Al₂O₃, 50-85 wt.% of P₂O₅, and 0.2-10 wt.% of SiO₂ based on its own dry weight, wherein the P₂O₅:Al₂O mass ratio is (1.5-5.0): 1, and the SiO₂:Al₂O₃ mass ratio is (0.01-0.3): 1; the number of colloidal particles having an average particle size in the range of 20-50 nm in the large-sized sol accounts for more than 60% of the total amount; the total pore volume of the catalytic cracking catalyst determined by a low-temperature nitrogen adsorption method is not less than 0.200 mL/g, wherein the pore volume of 4-50 nm mesopores accounts for more than 60% of the total pore volume. This catalytic cracking catalyst is capable of increasing the yield of propylene.

The catalytic cracking catalyst according to the second aspect of the present invention preferably comprises 25-45 wt.% of ZSM-5 zeolite, 20-60 wt.% of clay and 15-40 wt.% of large-particle-size sol; the large-particle-size sol comprises 15-35 wt.% of Al₂O₃, 55-80 wt.% of P₂O₅, and 0.5-8.0 wt.% of SiO₂ based on its own dry weight, wherein the P₂O₅:Al₂O mass ratio is preferably (2.0-4.5): 1, and the SiO₂:Al₂O₃ mass ratio is preferably (0.05-0.25): 1; the number of colloidal particles having an average particle size in the range of 25-45 nm in the large-sized sol accounts for more than 60% of the total amount; the total pore volume of the catalytic cracking catalyst can reach 0.200-0.300 mL/g, wherein the pore volume of 4-50 nm mesopores can account for 65-85% of the total pore volume.

The ZSM-5 zeolite comprised in the catalytic cracking catalyst according to the second aspect of the present invention can be selected from the group consisting of HZSM-5 zeolite, ZSM-5 zeolite comprising phosphorus and/or iron, ZSM-5 zeolite comprising phosphorus and/or rare earth, modified ZSM-5 zeolite or any combination thereof, wherein the modified ZSM-5 zeolite can be selected from the group consisting of Zn, Cu, Mg, Zr, Ti or B modified ZSM-5 zeolite. The clay comprised in the catalytic cracking catalyst according to the present invention can be various clays suitable for catalyst preparation well-known to those skilled in the art, for example, selected from the group consisting of kaolin, rectorite, diatomite, montmorillonite, bentonite, sepiolite or any combination thereof.

In another aspect, the present invention provides a method for the preparation of said catalytic cracking catalyst, comprising the following steps:
(1) firstly, a large-particle-size sol is prepared in the following steps:
   (1a) an aluminum source and deionized water are mixed and stirred at room temperature for more than 30 minutes to obtain a first slurry which has a solid content of 5-25 wt.%;
   (1b) the first slurry and a phosphorus source are mixed and stirred at a temperature not higher than 60 °C for more than 30 minutes to obtain a second slurry which has a solid content of 15-50 wt.%;
   (1c) a silica sol is added into the second slurry, mixed and stirred at a temperature not higher than 60 °C for more than 30 minutes to obtain a third slurry which has a solid content of 15-50 wt.%;
   (1d) the third slurry is set aside at 20 to 60 °C for 1-72 hours to carry out aging treatment to obtain the large-particle-size sol;
   wherein the mass ratio of the amount of the phosphorus source (calculated as P₂O₅) to that of the aluminum source is (1.5-5.0): 1, and the mass ratio of the amount of the silica sol (calculated as SiO₂) to that of the aluminum source (calculated as Al₂O₃) is (0.01-0.3): 1;
(2) then, clay, beta zeolite and/or ZSM-5 zeolite and the large-particle-size sol are mixed thoroughly and uniformly to obtain a fourth slurry which has a solid content of 10-50 wt.%; the fourth slurry is sprayed to shape, dried and calcined to obtain said catalytic cracking catalyst, wherein the weight ratio of the beta zeolite and/or ZSM-5 zeolite, the clay, and the large-particle-size sol based on a dry weight is (15-50): (10-75): (10-50).

According to one embodiment of the present invention, in the preparation method of the present invention, the aluminum source used in step (1a) is one or more selected from the group consisting of pseudo-boehmite, alumina, aluminum nitrate, aluminum isopropoxide, boehmite, gibbsite, and diaspore. The mixing and stirring time of the aluminum source and deionized water is preferably within the range of 30 to 60 minutes.

According to one embodiment of the present invention, in the preparation method of the present invention, the phosphorus source used in step (1b) is one or more selected from the group consisting of phosphoric acid, phosphorous acid, and hypophosphoric acid. Preferably, the first slurry prepared in step (1a) and the phosphorus source are mixed and stirred at a temperature of 35-55°C, and the mixing and stirring time is preferably 30-90 minutes.

According to one embodiment of the present invention, in the preparation method of the present invention, it is preferred that the selected aluminum source is capable of interacting with the selected phosphorus source to form different forms of aluminum phosphate.

According to one embodiment of the present invention, in the preparation method of the present invention, step (1c) is preferably carried out at a temperature of 35-55°C, and the mixing and stirring time of the second slurry prepared in step (1b) and the silica sol is preferably 30 to 90 minutes.

According to one embodiment of the present invention, in the preparation method of the present invention, without being limited by any known theory, it is believed that the OH on the surface of the aluminum source absorbs H+ in phosphoric acid to form positively charged colloidal particles, which is conducive to the formation of a large number of colloidal particles having an average particle size of 20-50nm. Adding silica sol particles will help inhibit further aggregation of colloidal particles and improve the stability of the colloidal structure.

According to one embodiment of the present invention, in the preparation method of the present invention, the selection of the clay and beta zeolite used in step (2) is as described above for the catalytic cracking catalyst of the present invention.

According to one embodiment of the present invention, in the preparation method of the invention, the molding and drying carried out in step (2) refers to granulation and drying of the catalyst, which is a technique well known to those skilled in the art. The preparation of catalytic cracking catalysts generally uses spray molding and drying, and the temperature of the spray exhaust gas is controlled at 100-250°C. Calcination treatment is also well known to those skilled in the art, for instance, it can be carried out in a muffle furnace. Calcination is carried out in the following conditions: temperature being 350-800 °C, preferably 400-650 °C, and calcination period being 0.5-6 hours, preferably 1-4 hours. Calcination can be carried out in any atmosphere, for example, an air or inert atmosphere; the inert atmosphere contains inert gases including nitrogen, helium, argon, etc.

When the catalytic cracking catalyst according to the present invention is used in the catalytic cracking process, it can be added separately into a catalytic cracking reactor or used in a mixture with other catalytic cracking catalysts. For example, the catalytic cracking catalyst according to the present invention can be used as a catalytic cracking co-agent. When the catalytic cracking catalyst according to the present invention is mixed and used with other catalytic cracking catalysts, based on the total amount of the catalytic cracking catalyst according to the present invention and other catalytic cracking catalysts, the amount of the catalytic cracking catalyst according to the present invention is preferably 1-50 wt.%, more preferably 5-40 wt.%. The other catalytic cracking catalysts may be catalytic cracking catalysts comprising a Y-type molecular sieve, for instance.

In general, compared with the prior art, the catalytic cracking catalyst according to the present invention has rich mesoporous structures thanks to the use of the large-particle-size sol of the present invention, wherein the pore volume of 4-50nm mesopores accounts for more than 60% of the total pore volume; when used in the catalytic cracking process, it favors the improvement of the diffusion ability of raw material molecules and product molecules, thereby significantly increasing the yield and selectivity of low-carbon olefins.

Specifically, the rich mesoporous structures of the catalytic cracking catalyst according to the present invention mainly comes from pore structures generated by the accumulation of colloidal particles of the large-particle-size sol comprised therein. The large-particle-size sol comprised in the catalytic cracking catalyst according to the present invention has at least functions in two aspects: on the one hand, it is distributed on the surface of zeolite molecular sieves and clay, giving full play to the binding properties and enhancing the strength of the catalyst; on the other hand, colloidal particles accumulate to form a pore structure, since the colloidal particle sizes of the large-particle-size sol of the present invention are concentrated in the range of 20 to 50 nm, the accumulation of the large-size particles can form a rich mesoporous structures. In contrast, conventional sol such as alumina sol and acidified pseudo-boehmite typically has a particle size less than 5nm, and the accumulation of the particles having a smaller particle size cannot form rich mesoporous structures and may even block the pore structure of molecular sieves.

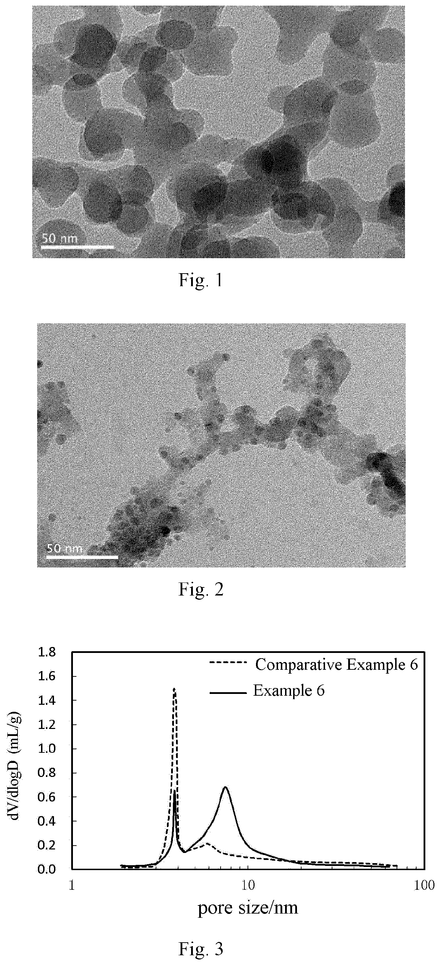

Furthermore, according to the TEM images and average particle size distributions shown in Figs. 1, 2, and 4, the particle size distribution of conventional aluminum phosphate sol prepared in the prior art is uneven and the particle size is small, typically less than 10 nm. In contrast, the large-particle-size sol prepared by the method of the present invention has a larger particle size (20-50nm) and a uniform distribution, thereby solving the problem of unclear mesoporous structures of the catalyst caused by the small particle size and uneven distribution of the existing aluminum phosphate sol.

The present invention is further illustrated through the following examples which are intended to help those skilled in the art to better understand the essence of the present invention and the advantageous effects as produced. However, the examples should not be interpreted as limitation in any form on the applicable scope of the present invention.

### Examples

The description for the raw materials used in each of the following examples and comparative examples is as follows:
kaolin comes from Suzhou Kaolin Company, having a solid content of 76 wt.%;
pseudo boehmite comes from Shandong Aluminum Plant, having a solid content of 62 wt.%;
silica sol, having a solid content of 27 wt.% and pH of 2 to 3;
H-type beta zeolite, having a solid content of 75 wt.%, SiO₂/Al₂O₃ molar ratio=25, Na₂O content of 0.15 wt.%;
H-type ZSM-5 zeolite, having a SiO₂/Al₂O₃ molar ratio of 42, Na₂O content of 3.5 wt.%, and a solid content of 80 wt.%;
phosphorus modified ZSM-5 zeolite, having SiO₂/Al₂O₃ molar ratio of 45, Na₂O content of 0.12 wt.%, P₂O₅ content of 2.1 wt.%, and a solid content of 83 wt.%;
phosphoric acid comes from Beijing Chemical Plant, with analytical grade specifications and a mass concentration of 85%.

Specific surface area and pore volume analysis: measurement is taken by low-temperature static nitrogen adsorption capacity method with ASAP 2405N V1.01 automatic adsorption instrument from Micromeritics in the United States. The sample is vacuum degassed at 1.33×10⁻² Pa and 300°C for 4 hours, N₂ is used as an adsorption medium, and the adsorption-desorption isotherm of the sample is measured at 77.4 K. The specific surface area of the sample is calculated according to the BET formula, and the volume of N₂ adsorbed by the sample at a relative pressure of p/p₀= 0.98 is determined; then volume is converted to a liquid nitrogen volume, namely, the total pore volume; the micropore volume is calculated according to the t-plot method; the difference between these two volumes is the volume of mesopores and macropores of 2-100 nm, wherein the pore volume of 4-50 nm mesopores is obtained by peak split fitting method. The pore size distribution is calculated using the data of BJH desorption pore size distribution.

Measurement of the colloidal particle size: analysis is performed using JEM-2000FX-II transmission electron microscopy from JEOL (Japan Electronics Company). The average particle size of colloidal particles is determined by randomly measuring the projections of 50 colloidal particles in the TEM image of the sample and taking the average value of the maximum circumcircle diameters.

Catalyst strength: the catalyst is placed in a fixed device and blown in a constant airflow for 5 hours. Except for the first hour, the average wear percentage in the last four hours is referred to as the wear index of catalyst, in % per hour. The method and standard are: air lift method Q/SYLS0518-2002.

Catalytic cracking catalyst assessment: The catalytic cracking catalyst was previously aged at 800°C and 100 volume % water vapor for 17 hours in a fixed bed aging device, and then evaluated on an ACE device, wherein the properties of reaction raw oil are shown in Table 4, reaction temperature is 500 °C, catalyst/oil weight ratio is 6, and WHSV is 16 s⁻¹; wherein conversion rate=gasoline yield + liquefied gas yield + dry gas yield + coke yield, and C4 olefin selectivity=C4 olefin yield/conversion rate.

The following Examples 1-5 are examples of preparing a large-particle-size sol according to the method of the present invention.

### Example 1

Firstly, 493 g of pseudo-boehmite was mixed with 1,546 g of deionized water and stirred for 60 minutes at room temperature (25 °C) to obtain a first slurry having a solid content of 15 wt.%. Then, 727 g of 85 wt.% phosphoric acid solution was added into the first slurry, and stirred for 60 minutes at 45 °C to obtain a second slurry having a solid content of 33 wt.%. Next, 283 g of silica sol was added into the second slurry and stirred continuously for 45 minutes at 45 °C to obtain a third slurry having a solid content of 33 wt.%. Lastly, the third slurry was set aside for 48 hours at 45 °C to obtain a large-particle-size sol A1 according to the method of the present invention.

### Example 2

Firstly, 413 g of pseudo-boehmite was mixed with 868 g of deionized water and stirred for 90 minutes at room temperature to obtain a first slurry having a solid content of 15 wt.%. Then, 839 g of 85 wt.% phosphoric acid solution was added into the first slurry, and stirred for 60 minutes at 50 °C to obtain a second slurry having a solid content of 38 wt.%. Next, 114 g of silica sol was added into the second slurry and stirred continuously for 30 minutes at 50 °C to obtain a third slurry having a solid content of 38 wt.%. Lastly, the third slurry was set aside for 12 hours at 50 °C to obtain a large-particle-size sol A2 according to the method of the present invention.

### Example 3

Firstly, 363 g of pseudo-boehmite was mixed with 1,888 g of deionized water and stirred for 60 minutes at room temperature to obtain a first slurry having a solid content of 10 wt.%. Then, 885 g of 85 wt.% phosphoric acid solution was added into the first slurry, and stirred for 60 minutes at 55 °C to obtain a second slurry having a solid content of 31 wt.%. Next, 83 g of silica sol was added into the second slurry and stirred continuously for 60 minutes at 55 °C to obtain a third slurry having a solid content of 31 wt.%. Lastly, the third slurry was set aside for 24 hours at 40 °C to obtain a large-particle-size sol A3 according to the method of the present invention.

### Example 4

Firstly, 299 g of pseudo-boehmite was mixed with 2,017 g of deionized water and stirred for 45 minutes at room temperature to obtain a first slurry having a solid content of 8 wt.%. Then, 911 g of 85 wt.% phosphoric acid solution was added into the first slurry, and stirred for 90 minutes at 50 °C to obtain a second slurry having a solid content of 30 wt.%. Next, 151 g of silica sol was added into the second slurry and stirred continuously for 30 minutes at 50 °C to obtain a third slurry having a solid content of 30 wt.%. Lastly, the third slurry was set aside for 24 hours at 35 °C to obtain a large-particle-size sol A4 according to the method of the present invention.

### Example 5

Firstly, 268 g of pseudo-boehmite was mixed with 3,059 g of deionized water and stirred for 60 minutes at room temperature to obtain a first slurry having a solid content of 5 wt.%. Then, 979 g of 85 wt.% phosphoric acid solution was added into the first slurry, and stirred for 90 minutes at 60 °C to obtain a second slurry having a solid content of 23 wt.%. Next, 6 g of silica sol was added into the second slurry and stirred continuously for 30 minutes at 60 °C to obtain a third slurry having a solid content of 23 wt.%. Lastly, the third slurry was set aside for 12 hours at 60 °C to obtain a large-particle-size sol A5 according to the method of the present invention.

### Comparative Example 1

A comparative sol was prepared according to the method of Example 1, except that no silica sol was added.

Firstly, 534 g of pseudo-boehmite was mixed with 1,674 g of deionized water and stirred for 60 minutes at room temperature to obtain a first slurry having a solid content of 15 wt.%. Then, 787 g of 85 wt.% phosphoric acid solution was added into the first slurry, and stirred for 60 minutes at 45 °C to obtain a second slurry having a solid content of 33 wt.%. The second slurry was set aside for 48 hours at 45 °C to obtain a comparative sol DA1.

### Comparative Example 2

A comparative sol was prepared according to the method of Example 1, except that no aging treatment was carried out.

Firstly, 493 g of pseudo-boehmite was mixed with 1,546 g of deionized water and stirred for 60 minutes at room temperature to obtain a first slurry having a solid content of 15 wt.%. Then, 727 g of 85 wt.% phosphoric acid solution was added into the first slurry, and stirred for 60 minutes at 45 °C to obtain a second slurry having a solid content of 33 wt.%. Next, 283 g of silica sol was added into the second slurry and stirred continuously for 45 minutes at 45 °C to obtain a third slurry having a solid content of 33 wt.%; thereby, a comparative sol DA2 was obtained.

### Comparative Example 3

A comparative sol was prepared according to the method of Example 1 of CN1417296A, wherein the difference from the above Examples 1-5 was that no silica sol was added and no aging treatment was carried out.

534 g of pseudo-boehmite was mixed with 1,674 g of deionized water and stirred for 30 minutes at room temperature; then 787 g of 85 wt.% phosphoric acid solution was added into the slurry under stirring. After stirring for 45 minutes at 70 °C, a colorless and transparent phosphorus-comprising alumina sol was obtained, i.e. comparative sol DA3.

The physiochemical properties of the sols obtained in Examples 1-5 and the Comparative Examples 1-3 are shown in Table 1. The TEM images of the sols obtained in Example 1 and the Comparative Example 3 are shown in Figs. 1 and 2.

**Table 1: Composition and properties of the sols obtained in Examples 1-5 and Comparative Examples 1-3**

| Sol name | A1 | A2 | A3 | A4 | A5 | DA1 | DA2 | DA3 |
|---|---|---|---|---|---|---|---|---|
| P₂O₅, wt.% | 61.8 | 71.3 | 75.2 | 77.4 | 83.2 | 66.9 | 61.8 | 66.9 |
| Al₂O₃, wt.% | 30.6 | 25.6 | 22.5 | 18.5 | 16.6 | 33.1 | 30.6 | 33.1 |
| SiO₂, wt.% | 7.6 | 3.1 | 2.3 | 4.1 | 0.2 | 0.0 | 7.6 | 0.0 |
| Average particle size, nm | 35 | 40 | 38 | 30 | 25 | 12 | 15 | 5 |

It can be seen from Table 1 and Figs. 1 and 2 that, compared to the comparative examples, the sols obtained according to the preparation method of the present invention have a larger sol particle size and uniform distribution of sol particle size, which helps to form mesoporous structures and improve the yield and selectivity of C4 olefins.

The following Examples 6-10 are examples of the preparation of a catalytic cracking catalyst comprising a large-particle-size sol according to the present invention.

### Example 6

428 g of kaolin and 1,604 g of decationized water were added into a beating tank and subjected to beating for 60 minutes; then 286 g of H-type beta zeolite slurry (wherein the slurry comprised 167 g H (hydrogen type) beta zeolite and had a solid content of 35wt.%) was added hereinto and stirred for 30 minutes; lastly, 227 g of the large-particle-size sol (A1) obtained in the above Example 1 was added hereinto and stirred for 15 minutes, resulting in a slurry having a solid content of 19.7 wt.%. Then, the resulting slurry was subjected to spray molding and drying, and was calcined at 500 °C for 2h to obtain a catalytic cracking catalyst C1 comprising a large-particle-size sol according to the present invention.

### Example 7

349 g of kaolin and 976 g of decationized water were added into a beating tank and subjected to beating for 60 minutes; then 289 g of the large-particle-size sol (A2) obtained in the above Example 2 was added hereinto and continuously stirred for 60 minutes; lastly, 329 g of H-type beta zeolite slurry (wherein the slurry comprised 167g H-beta zeolite and had a solid content of 38 wt.%) was added hereinto and stirred for 30 minutes, resulting in a slurry having a total solid content of 25.7wt.%. Then, the resulting slurry was subjected to spray molding and drying, and was calcined at 550 °C for 1.5 h to obtain a catalytic cracking catalyst C2 comprising a large-particle-size sol according to the present invention.

### Example 8

296 g of kaolin, 403 g of the large-particle-size sol (A3) obtained in the above Example 3, and 647 g of decationized water were mixed and beaten, and stirred for 90 minutes. Then 500 of H-beta zeolite slurry (wherein the slurry comprised 200 g H-beta zeolite and had a solid content of 30 wt.%) was added into the above slurry and stirred for 60 minutes, resulting in a slurry having a total solid content of 32.3 wt.%. Then, the resulting slurry was subjected to spray molding and drying, and was calcined at 600 °C for 1.0 h to obtain a catalytic cracking catalyst C3 comprising a large-particle-size sol according to the present invention.

### Example 9

543 g of beta zeolite slurry (wherein the slurry comprised 253 g H-beta zeolite and had a solid content of 35 wt.%), and 500g of the large-particle-size sol (A4) obtained in the above Example 4 were mixed and stirred for 60 minutes. Then 800 g of kaolin slurry (the slurry comprised 211 g of kaolin and had a solid content of 20 wt.%) was added into the above slurry and continuously stirred for 60 minutes, resulting in a slurry having a solid content of 27.1 wt.%. Then, the resulting slurry was subjected to spray molding and drying, and was calcined at 500 °C for 2.0 h to obtain a catalytic cracking catalyst C4 comprising a large-particle-size sol according to the present invention.

### Example 10

99 g of kaolin and 276 g of decationized water were added into a beating tank and subjected to beating for 60 minutes; then 643 g of H-beta zeolite slurry (wherein the slurry comprised 300g H-beta zeolite and had a solid content of 35 wt.%) was added hereinto and stirred for 30 minutes; lastly, 870 go of the large-particle-size sol (A5) obtained in the above Example 5 was added hereinto and stirred for 30 minutes, resulting in a slurry having a solid content of 26.5 wt.%. Then, the resulting slurry was subjected to spray molding and drying, and was calcined at 450 °C for 2 h to obtain a catalytic cracking catalyst C5 comprising a large-particle-size sol according to the present invention.

### Comparative Examples 4-6

A catalytic cracking catalyst was prepared according to the method in Example 6, except that sol (DA1) prepared in the Comparative Example 1, sol (DA2) prepared in the Comparative Example 2, and sol (DA3) prepared in the Comparative Example 3 were used in Comparative Examples 4-6 to replace large-particle-size sol (A1) prepared in the Example 1 used in Example 6, and catalytic cracking catalysts DC1 to DC3 were obtained accordingly.

The physicochemical properties of the catalysts obtained in Examples 6-10 and Comparative Examples 4-6 are shown in Table 2. The pore size distributions of the catalysts are shown in Fig. 3.

**Table 2: Composition and properties of the catalytic cracking catalysts obtained in Examples 6-10 and Comparative Examples 4-6**

| Serial No. | Exa mpl e 6 | Exa mpl e 7 | Exa mpl e 8 | Exa mpl e 9 | Exa mple 10 | Comparati ve Example 4 | Comparati ve Example 5 | Comparati ve Example 6 | |
|---|---|---|---|---|---|---|---|---|---|
| | C1 | C2 | C3 | C4 | C5 | DC1 | DC2 | DC3 | |
| H-beta zeolite, % | 20 | 25 | 30 | 38 | 45 | 20 | 20 | 20 | |
| Kaolin, % | 65 | 53 | 45 | 32 | 15 | 65 | 65 | 65 | |
| Sol, % | 15 | 22 | 25 | 30 | 40 | 15 | 15 | 15 | |

| Sol type | | A1 | A2 | A3 | A4 | A5 | DA1 | DA2 | DA3 |
|---|---|---|---|---|---|---|---|---|---|
| Total, % | | 100 | 100 | 100 | 100 | 100 | 100 | 100 | 100 |
| Co-agent propert y | Spe cific surf ace area, m²/ g | 137 | 185 | 220 | 241 | 210 | 120 | 117 | 104 |
| | Tota l pore volu me, mL/ g | 0.22 | 0.23 | 0.25 | 0.24 | 0.20 | 0.12 | 0.08 | 0.06 |
| | % of pore volu me of 4-50 nm mes opor es in the total pore volu me | 79% | 80% | 75% | 70% | 65% | 55% | 50% | 48% |
| | Wea r inde X, % | 1.5 | 2.2 | 2.8 | 2.6 | 2.8 | 2.0 | 2.5 | 1.7 |

It can be seen from Table 2 and Fig. 3 that, compared with the comparative examples, the catalytic cracking catalysts comprising a large-particle-size sol and prepared according to the method of the present invention have a significantly increased total pore volume, i.e. have rich pore structures, and the proportion of 4-50 nm mesopores is significantly increased, reaching more than 60% of the total pore volume.

### Examples 11-15 and Comparative Examples 7-9

The following Examples 11-15 and Comparative Examples 7-9 respectively evaluated the catalytic cracking performance and capability in increasing the yield of C4 olefins of the catalysts comprising a large-particle size sol of the present invention and of the comparative catalysts.

The catalysts C1-C5 comprising a large-particle-size sol prepared according to the method of the present invention and the catalysts DC1 to DC3 prepared in the comparative examples were respectively mixed with industrial catalyst (brand name HSC, provided by Qilu branch of Sinopec Catalyst Co., Ltd., main properties are shown in Table 3) in a mass ratio of 2:8 to provide a catalyst mixture. The catalyst mixture was aged on a fixed bed aging device at 800 °C in 100% water vapor for 17 hours. Then assessment was carried out on an ACE device. The properties of the raw oil used for the assessment are shown in Table 4. The reaction temperature, catalyst/oil ratio, weight hourly space velocity, and assessment results are listed in Table 5. Wherein conversion rate=gasoline yield + liquefied gas yield + dry gas yield + coke yield; C4 olefin selectivity=C4 olefin yield/conversion rate.

**Table 3: Properties of HSC industrial catalysts**

| Name | | Industrial catalysts |
|---|---|---|
| Chemical composition % | RE₂O₃ | 2.2 |
| | Al₂O₃ | 52.1 |
| | Na₂O | 0.12 |
| Physical properties | Specific surface area (m²×g⁻¹) | 292 |
| | Total pore volume (mL×g⁻¹) | 0.17 |
| | Bulk density (g×cm⁻³) | 0.75 |
| | Wear index (%) | 1.3 |
| | MA (800°C /17h) | 65 |

**Table 4: Properties of raw oil**

| Item | | Data |
|---|---|---|
| Density (20°C) (kg•cm⁻³) | | 920 |
| w(Carbon residue value) % | | 2.42 |
| w(C) % | | 86.12 |
| w(H) % | | 11.82 |
| Metal mass fraction (µg•g⁻¹) | Fe | 3.2 |
| | Ni | 3.8 |
| | V | 3.8 |
| Mass fraction of four components % | Saturated hydrocarbon | 62.1 |
| | Aromatic hydrocarbon | 26.6 |
| | Gum | 10.7 |
| | Asphaltene | 0.6 |

**Table 5 Assessment results**

| Example No. | | Example 11 | Example 12 | Example 13 | Example 14 | Example 15 | Comparative Example 7 | Comparative Example 8 | Comparat ive Example 9 |
|---|---|---|---|---|---|---|---|---|---|
| Composition of the catalyst mixture | | 20wt.% C1+ 80wt.% industrial catalyst | 20wt.% C2 + 80wt.% industrial catalyst | 20wt.% C3 + 80wt.% industrial catalyst | 20wt.% C4 + 80wt.% industrial catalyst | 20wt.% C5 + 80wt.% industrial catalyst | 20wt.% DC1+ 80wt.% industrial catalyst | 20wt.% DC2 + 80wt.% industrial catalyst | 20wt.% DC3 + 80wt.% industrial catalyst |
| Reaction temperature, °C | | 500 | 500 | 500 | 500 | 500 | 500 | 500 | 500 |
| Catalyst/oil ratio | | 5.92 | 5.92 | 5.92 | 5.92 | 5.92 | 5.92 | 5.92 | 5.92 |
| Yield of the cracking products, wt.% | Dry gas | 1.62 | 1.66 | 1.57 | 1.54 | 1.51 | 1.65 | 1.69 | 1.64 |
| | Liquefied gas | 23.24 | 24.04 | 23.73 | 23.22 | 22.46 | 20.68 | 21.95 | 19.47 |
| | Gasoline | 43.80 | 44.04 | 44.75 | 44.11 | 43.49 | 43.59 | 43.87 | 43.26 |
| | Diesel oil | 15.76 | 15.16 | 15.04 | 15.09 | 16.4 | 17.32 | 17.08 | 17.48 |
| | Heavy oil | 9.48 | 9.07 | 9.11 | 9.14 | 10.01 | 10.62 | 9.37 | 11.71 |
| | Coke | 6.10 | 6.03 | 5.80 | 6.9 | 6.13 | 6.14 | 6.04 | 6.44 |
| Conversion rate, wt.% | | 74.16 | 75.77 | 75.85 | 75.77 | 73.59 | 72.06 | 73.55 | 70.81 |
| C4 olefin, wt.% | | 8.41 | 8.60 | 8.59 | 8.52 | 8.12 | 7.19 | 7.33 | 6.66 |
| C4 olefin selectivity, % | | 11.2 | 11.4 | 11.3 | 11.2 | 11.0 | 10.0 | 10.0 | 9.4 |

It can be seen from Table 5 that, compared with the comparative examples, when the catalytic cracking catalysts comprising a large-particle-size sol prepared in the examples of the present invention are used in a hydrocarbon oil catalytic cracking reaction, they improve the yield of C4 olefins in the catalytic cracking reaction products and significantly improve the C4 olefin selectivity.

### Example Z1

Firstly, 483 g of the pseudo-boehmite and 1,514 g of deionized water were mixed and stirred for 60 minutes at room temperature to obtain a first slurry having a solid content of 15 wt.%. Then, 736 g of 85 wt.% phosphoric acid solution was added into the first slurry, and stirred for 60 minutes at 45 °C to obtain a second slurry having a solid content of 34 wt.%. Next, 277 g of silica sol was added into the second slurry and stirred continuously for 45 minutes at 45 °C to obtain a third slurry having a solid content of 33 wt.%. Lastly, the third slurry was set aside for 24 hours at 45 °C to obtain a large-particle-size sol ZA1 prepared according to the method of the present invention.

### Example Z2

Firstly, 399 g of the pseudo-boehmite and 1,250 g of deionized water were mixed and stirred for 90 minutes at room temperature to obtain a first slurry having a solid content of 15 wt.%. Then, 851 g of 85 wt.% phosphoric acid solution was added into the first slurry, and stirred for 60 minutes at 50 °C to obtain a second slurry having a solid content of 39 wt.%. Next, 110 g of silica sol was added into the second slurry and stirred continuously for 60 minutes at 50 °C to obtain a third slurry having a solid content of 38 wt.%. Lastly, the third slurry was set aside for 24 hours at 50 °C to obtain a large-particle-size sol ZA2 prepared according to the method of the present invention.

### Example Z3

Firstly, 352 g of the pseudo-boehmite and 1,831 g of deionized water were mixed and stirred for 60 minutes at room temperature to obtain a first slurry having a solid content of 10 wt.%. Then, 894 g of 85 wt.% phosphoric acid solution was added into the first slurry, and stirred for 60 minutes at 55 °C to obtain a second slurry having a solid content of 31 wt.%. Next, 81 g of silica sol was added into the second slurry and stirred continuously for 60 minutes at 55 °C to obtain a third slurry having a solid content of 31 wt.%. Lastly, the third slurry was set aside for 24 hours at 40 °C to obtain a large-particle-size sol ZA3 prepared according to the method of the present invention.

### Example Z4

Firstly, 291 g of the pseudo-boehmite and 1,967 g of deionized water were mixed and stirred for 45 minutes at room temperature to obtain a first slurry having a solid content of 8 wt.%. Then, 917 g of 85 wt.% phosphoric acid solution was added into the first slurry, and stirred for 90 minutes at 50 °C to obtain a second slurry having a solid content of 30 wt.%. Next, 147 g of silica sol was added into the second slurry and stirred continuously for 30 minutes at 50 °C to obtain a third slurry having a solid content of 30 wt.%. Lastly, the third slurry was set aside for 48 hours at 35 °C to obtain a large-particle-size sol ZA4 prepared according to the method of the present invention.

### Example Z5

Firstly, 277 g of the pseudo-boehmite and 3,163 g of deionized water were mixed and stirred for 60 minutes at room temperature to obtain a first slurry having a solid content of 5 wt.%. Then, 972 g of 85 wt.% phosphoric acid solution was added into the first slurry, and stirred for 90 minutes at 60 °C to obtain a second slurry having a solid content of 23 wt.%. Next, 6 g of silica sol was added into the second slurry and stirred continuously for 30 minutes at 60 °C to obtain a third slurry having a solid content of 23 wt.%. Lastly, the third slurry was set aside for 12 hours at 60 °C to obtain a large-particle-size sol ZA5 prepared according to the method of the present invention.

### Comparative Example Z1

A comparative sol was prepared according to the method of Example Z2, except that no silica sol was added.

Firstly, 411 g of the pseudo-boehmite and 1,288g of deionized water were mixed and stirred for 60 minutes at room temperature to obtain a first slurry having a solid content of 15 wt.%. Then, 877 g of 85 wt.% phosphoric acid solution was added into the first slurry, and stirred for 60 minutes at 45 °C to obtain a second slurry having a solid content of 39 wt.%. The second slurry was set aside for 48 hours at 45 °C to obtain a comparative sol DZA1.

### Comparative Example Z2

A comparative sol was prepared according to the method of Example Z2, except that no aging treatment was carried out.

Firstly, 386 g of the pseudo-boehmite and 1,211g of deionized water were mixed and stirred for 60 minutes at room temperature to obtain a first slurry having a solid content of 15 wt.%. Then, 824 g of 85 wt.% phosphoric acid solution was added into the first slurry, and stirred for 60 minutes at 45 °C to obtain a second slurry having a solid content of 39 wt.%. Next, 222 g of silica sol was added into the second slurry and stirred continuously for 45 minutes at 45 °C to obtain a third slurry having a solid content of 38 wt.%. Thus, a comparative sol DZA2 was obtained.

### Comparative Example Z3

A comparative sol was prepared with reference to the preparation method of the above Comparative Example 3 and according to the method in Example 1 in CN1417296A. The difference from the above Examples Z1-Z5 was that no silica sol was added and no aging treatment was carried out.

534 g of the pseudo-boehmite and 1,674 of deionized water were mixed and stirred for 30 minutes at room temperature. 787 g of 85 wt.% phosphoric acid solution was added into the slurry under stirring. After stirring for 45 minutes at 70 °C, a colorless and transparent phosphorus-comprising alumina sol having a solid content of 33% was obtained, which is comparative sol DZA3.

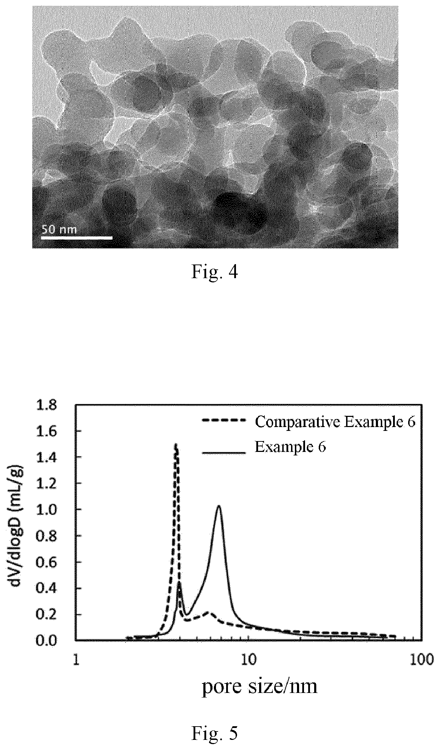

The physicochemical properties of the sols obtained in Examples Z1-Z5 and Comparative Examples Z1-Z3 are shown in Table Z1. The TEM images of the sols obtained from Example Z1 and Comparative Example Z3 are shown in Fig. 4 and Fig.2, respectively.

**Table Z1: Composition and Properties of sols obtained in Examples Z1-Z5 and Comparative Examples Z1-Z3**

| Sol name | ZA1 | ZA2 | ZA3 | ZA4 | ZA5 | DZA1 | DZA2 | DZA3 |
|---|---|---|---|---|---|---|---|---|
| P₂O₅, wt.% | 62.6 | 72.3 | 76.0 | 78.0 | 82.6 | 74.5 | 70.0 | 66.9 |
| Al₂O₃, wt.% | 30.0 | 24.7 | 21.8 | 18.1 | 17.2 | 25.5 | 24.0 | 33.1 |
| SiO₂, wt.% | 7.5 | 3.0 | 2.2 | 4.0 | 0.2 | 0.0 | 6.0 | 0.0 |
| Average particle size, nm | 38 | 40 | 35 | 33 | 28 | 10 | 18 | 5 |

It can be seen from Table Z1 and Fig.4 and Fig.2 that, compared to the comparative examples, the sols obtained according to the preparation method of the present invention have a larger particle size and a uniform distribution of particle size, which helps to form mesoporous structures and is less likely to block the molecular sieve channels, so that propylene can rapidly diffuse and avoid secondary reactions, thereby increasing the yield and selectivity of propylene.

The following Examples Z6 to Z10 are examples of the preparation of a catalytic cracking catalyst comprising a large-particle-size sol according to the present invention.

### Example Z6

355 g of kaolin and 1,145 g of decationized water were added into a beating tank and subjected to beating for 60 minutes; then 400 g of HZSM-5 zeolite slurry (wherein the slurry comprised 175 g of HZSM-5 zeolite and had a solid content of 35 wt.%) was added hereinto and stirred for 30 minutes; lastly, 273 g of the large-particle-size sol (ZA1) obtained in the above Example Z1 was added hereinto and stirred for 15 minutes. The resulting slurry had a solid content of 23.0 wt.%. Then, the resulting slurry was subjected to spray molding and drying, and was calcined at 500 °C for 2 h to obtain a catalytic cracking catalyst ZC1 comprising a large-particle-size sol according to the present invention.

### Example Z7

237 g of kaolin and 888 g of deionized water were added into a beating tank and subjected to beating for 60 minutes; then 368 g of the large-particle-size sol (ZA2) obtained in the above Example Z2 was added hereinto and continuously stirred for 60 minutes; lastly, 474 g of HZSM-5 zeolite slurry (wherein the slurry comprised 225 g of HZSM-5 zeolite and had a solid content of 38 wt.%) was added hereinto and stirred for 30 minutes. The total solid content of the resulting slurry was 25.4 wt.%. Then, the resulting slurry was subjected to spray molding and drying, and was calcined at 550 °C for 1.5 h to obtain a catalytic cracking catalyst ZC2 comprising a large-particle-size sol according to the present invention.

### Example Z8

197 g of kaolin and 469 g of the large-particle-size sol (ZA3) obtained in the above Example Z3 and 683 deionized water were mixed, beaten, and stirred for 90 minutes. Then, 667 g of phosphorus modified ZSM-5 zeolite slurry (wherein the slurry comprised 241 g of phosphorus modified ZSM-5 zeolite and had a solid content of 30 wt.%) was added into the above slurry and stirred for 60 minutes. The total solid content of the resulting slurry was 31.4 wt.%. Then, the resulting slurry was subjected to spray molding and drying, and was calcined at 600 °C for 1.0 h to obtain a catalytic cracking catalyst ZC3 comprising a large-particle-size sol according to the present invention.

### Example Z9

643 g of phosphorus modified ZSM-5 zeolite slurry (wherein the slurry comprised 271 g of phosphorus modified ZSM-5 zeolite and had a solid content of 35 wt.%), 583 g of the large-particle-size sol (ZA4) obtained in the above Example Z4 were mixed and stirred for 60 minutes. Then, 500 g of kaolin slurry (wherein the slurry comprised 132 g of kaolin and had a solid content of 20 wt.%) was added into the above slurry and continuously stirred for 60 minutes. The resulting slurry had a solid content of 29.0 wt.%. Then, the resulting slurry was subjected to spray molding and drying, and was calcined at 500 °C for 2 h to obtain a catalytic cracking catalyst ZC4 comprising a large-particle-size sol according to the present invention.

### Example Z10

66 g of kaolin and 247 g of deionized water were added into a beating tank and subjected to beating for 60 minutes; then 714 g of ZSM-5 zeolite slurry (wherein the slurry comprised 313 g of ZSM-5 zeolite and had a solid content of 35 wt.%) was added hereinto and stirred for 30 minutes; lastly, 870 g of the large-particle-size sol (ZA5) obtained in the above Example Z5 was added hereinto and stirred for 30 minutes. The resulting slurry had a solid content of 26.5 wt.%. Then, the resulting slurry was subjected to spray molding and drying, and was calcined at 450 °C for 2 h to obtain a catalytic cracking catalyst ZC5 comprising a large-particle-size sol according to the present invention.

### Comparative Example Z4-Comparative Example Z6

A catalytic cracking catalyst was prepared according to the method of Example Z7, except that Comparative Examples Z4 to Z6 use the sol (DZA1) prepared in Comparative Example Z1, sol (DZA2) prepared in Comparative Example Z2 and sol (DZA3) prepared in Comparative Example Z3 respectively to replace the large-particle-sol (ZA2) (which is prepared in Example Z2) used in Example Z7. Comparative catalytic cracking catalysts DZC1 to DZC3 were obtained accordingly.

The physicochemical properties of the catalysts obtained in Examples Z6-Z10 and Comparative Examples Z4 to Z6 are shown in Table Z2. The pore size distributions of the catalysts are shown in Figure 5.

**Table Z2: Composition and properties of the catalytic cracking catalysts obtained in Examples Z6-Z10 and Comparative Examples Z4-Z6**

| Serial No. | | Exam ple Z6 | Exam ple Z7 | Exam ple Z8 | Exam ple Z9 | Exam ple Z10 | Comp arativ e Exam ple Z4 | Comp arativ e Exam ple Z5 | Comp arativ e Exam ple Z6 |
|---|---|---|---|---|---|---|---|---|---|
| | | ZC1 | ZC2 | ZC3 | ZC4 | ZC5 | DZC1 | DZC2 | DZC3 |
| ZSM-5 zeolite,% | | 28 | 36 | 40 | 45 | 50 | 36 | 36 | 36 |
| Kaolin, % | | 54 | 36 | 30 | 20 | 10 | 36 | 36 | 36 |
| Sol, % | | 18 | 28 | 30 | 35 | 40 | 28 | 28 | 28 |
| Sol type | | ZA1 | ZA2 | ZA3 | ZA4 | ZA5 | DZA1 | DZA2 | DZA3 |
| Total, % | | 100 | 100 | 100 | 100 | 100 | 100 | 100 | 100 |
| Coagen | Specific surface | 137 | 155 | 187 | 200 | 210 | 120 | 117 | 104 |
| t prop erty | area, m²/g | | | | | | | | |
| | Total pore volume, mL/g | 0.25 | 0.24 | 0.26 | 0.24 | 0.22 | 0.18 | 0.18 | 0.13 |
| | % of pore volume of 4-50 nm mesopore s in the total pore volume | 78% | 80% | 76% | 74% | 69% | 55% | 48% | 36% |
| | Wear index,% | 1.5 | 2.2 | 2.8 | 2.6 | 2.8 | 2.0 | 2.5 | 1.7 |

It can be seen from Table Z2 and Fig.5 that, compared to the comparative examples, the catalytic cracking catalysts comprising a large-particle-size sol prepared according to the method of the present invention has a significantly increased total pore volume, i.e. rich pore structures, and the proportion of 4-50 nm mesopores has significantly increased, reaching more than 60% of the total pore volume.

### Examples Z11-Z15 and Comparative Examples Z7-Z9

The following examples Z11-Z15 and Comparative Examples Z7-Z9 respectively assessed the catalytic cracking performance and the ability in increasing propylene yield of the catalysts comprising a large-particle-size sol according to the present invention and the comparative catalysts.

The catalysts ZC1-ZC5 comprising a large-particle-size sol and prepared according to the method of the present invention and the catalysts DZC1 to DZC3 prepared in the comparative examples were respectively mixed with HSC industrial catalyst (provided by Qilu branch of Sinopec Catalyst Co., Ltd., its main properties are shown in Table Z3) in a mass ratio of 5:95 to provide a catalyst mixture. The catalyst mixture was aged on a fixed bed aging device at 800 °C in 100% water vapor for 17 hours. Then assessment was carried out on an ACE device, wherein the properties of the raw oil used for the assessment are shown in Table Z4. The reaction temperature, catalyst/oil ratio and assessment results are listed in Table Z5. Wherein, conversion rate=gasoline yield + liquefied gas yield + dry gas yield + coke yield; propylene selectivity=propylene yield/conversion rate.

**Table Z3: Properties of HSC industrial catalysts**

| Name | | Industrial catalysts |
|---|---|---|
| Chemical composition, % | RE₂O₃ | 2.8 |
| | Al₂O₃ | 54.2 |
| | Na₂O | 0.15 |
| Physical properties | Specific surface area (m²×g⁻¹) | 286 |
| | Total pore volume (mL×g⁻¹) | 0.16 |
| | Bulk density (g×cm⁻³) | 0.78 |
| | Wear index (%) | 1.5 |
| | MA (800°C/17h) | 64 |

**Table Z4: Properties of raw oil**

| Item | | Data |
|---|---|---|
| Density (20°C) (kg•cm⁻³) | | 922 |
| w(Carbon residue value) % | | 2.55 |
| w(C) % | | 86.12 |
| w(H) % | | 11.42 |
| Metal mass fraction (µg•g⁻¹) | Fe | 3.0 |
| | Ni | 4.0 |
| | V | 3.5 |
| Mass fraction of four components, % | Saturated hydrocarbon | 61.8 |
| | Aromatic hydrocarbon | 27.5 |
| | Gum | 10.8 |
| | Asphaltene | 0.5 |

**Table Z5: Assessment results**

| Example No. | | Example Z11 | Example Z12 | Example Z13 | Example Z14 | Example Z15 | Comparative Example Z7 | Comparative Example Z8 | Comparative Example Z9 |
|---|---|---|---|---|---|---|---|---|---|
| Composition of the catalyst mixture | | 20wt.%ZC1+ 80wt.% industrial catalyst | 20wt.%ZC2+ 80wt.% industrial catalyst | 20wt.%ZC3+ 80wt.% industrial catalyst | 20wt.%ZC4+ 80wt.% industrial catalyst | 20wt.%ZC5+ 80wt.% industrial catalyst | 20wt.%DZC1 + 80wt.% industrial catalyst | 20wt.%DZC2 + 80wt.% industrial catalyst | 20wt.%DZC3 + 80wt.% industrial catalyst |
| Reaction temperature, °C | | 500 | 500 | 500 | 500 | 500 | 500 | 500 | 500 |
| Catalyst/oil ratio | | 5.92 | 5.92 | 5.92 | 5.92 | 5.92 | 5.92 | 5.92 | 5.92 |
| Yield of the crackin g product s wt.% | 1.58 | 1.57 | 1.69 | 1.75 | 1.56 | 1.55 | 1.54 | 1.52 | 1.52 |
| | 18.86 | 19.34 | 20.71 | 21.48 | 21.69 | 19.25 | 18.23 | 18.56 | 18.56 |
| | 41.88 | 41.19 | 39.97 | 38.97 | 39.04 | 41.03 | 40.27 | 41.28 | 41.28 |
| | 17.17 | 17.00 | 16.53 | 16.99 | 17.31 | 17.78 | 17.99 | 17.79 | 17.79 |
| | 11.25 | 11.60 | 11.84 | 11.50 | 11.33 | 11.17 | 12.06 | 11.62 | 11.62 |
| | 9.26 | 9.30 | 9.26 | 9.31 | 9.07 | 9.22 | 9.91 | 9.23 | 9.23 |
| Conversion rate, wt.% | | 71.58 | 71.40 | 71.63 | 71.51 | 71.36 | 71.05 | 69.95 | 70.59 |
| Propylene, wt.% | | 7.01 | 7.22 | 7.42 | 7.85 | 7.52 | 6.35 | 6.02 | 6.16 |
| Propylene selectivity, % | | 9.79 | 10.11 | 10.36 | 10.98 | 10.54 | 8.94 | 8.61 | 8.73 |

It can be seen from Table Z5 that, compared with the comparative examples, when the catalytic cracking catalysts comprising a large-particle-size sol prepared in the examples of the present invention are used in a hydrocarbon oil catalytic cracking reaction, they significantly increase the propylene yield in the catalytic cracking reaction product and significantly increase propylene selectivity.

The present invention has been illustrated in combination with preferred embodiments as the above. These embodiments are exemplary and illustrative only. On this basis, various substitutions and improvements can be made to this application, all of which fall within the protection scope of the present invention.

## Claims

1. A large-particle-size sol comprising, based on the dry weight of the large-particle-size sol, 10-40 wt.% Al₂O₃, 50-85 wt.% P₂O₅, and 0.2-10 wt.% SiO₂, wherein the P₂O₅:Al₂O₃ mass ratio is (1.5-5.0): 1, and the SiO₂:Al₂O₃ mass ratio is (0.01-0.3): 1, the average particle size of the large-particle-size sol being in the range of 20-50 nm.

2. The large-particle-size sol according to claim 1, comprising, on a dry basis, 15-35 wt.% of Al₂O₃, 55-80 wt.% of P₂O₅, and 0.5-8.0 wt.% of SiO₂, wherein the P₂O₅:Al₂O mass ratio is (2.0-4.5): 1, the SiO₂:Al₂O₃ mass ratio is (0.05-0.25): 1.

3. The large-particle-size sol according to claim 1, having an average particle size distribution in the range of 25-45nm.

4. A composition used for catalytic cracking, comprising, based on its dry weight, 15-50 wt.% of beta zeolite and/or ZSM-5 zeolite, 10-75 wt.% of clay, 10-50 wt.% of the large-particle-size sol according to any one of claims 1-3.

5. The composition according to claim 4, comprising, based on its dry weight, 20-40 wt.% of beta zeolite, 20-65 wt.% of clay, and 15-45 wt.% of large-particle-size sol.

6. The composition according to claim 4, wherein the beta zeolite is selected from the group consisting of H-type beta zeolite, Na-type beta zeolite, phosphorus and/or metal modified beta zeolite and metal modified beta zeolite or any combination thereof, preferably H-type beta zeolite, and the molar ratio of SiO₂ to Al₂O₃ in the beta zeolite is 20-50.

7. The composition according to claim 6, wherein the metal in the metal modified beta zeolite is one or more selected from the group consisting of La, Ce, Pr, Zr, Ti, Fe, Cu, Mg.

8. The composition according to claim 4, wherein the ZSM-5 zeolite is selected from the group consisting of HZSM-5 zeolite, ZSM-5 zeolite comprising phosphorus and/or iron, ZSM-5 zeolite comprising phosphorus and/or rare earth, and modified ZSM-5 zeolite, and the modified ZSM-5 zeolite is selected from the group consisting of Zn, Cu, Mg, Zr, Ti or B modified ZSM-5 zeolite.

9. The composition according to claim 4, wherein clay is one or more selected from the group consisting of kaolin, rectorite, diatomite, montmorillonite, bentonite, and sepiolite.

10. A catalytic cracking catalyst, which is prepared by drying and calcining the composition according to any one of claims 4-9, wherein the pore distribution is determined by a low-temperature nitrogen adsorption method, the total pore volume of the catalytic cracking catalyst is not less than 0.200 mL/g, and the pore volume of mesopores having a pore size of 4-50 nm accounts for more than 60% of the total pore volume.

11. The catalytic cracking catalyst according to claim 10, wherein the pore distribution is determined by a low-temperature nitrogen adsorption method, and total pore volume of the catalytic cracking catalyst is 0.200-0.300 mL/g,

12. The catalytic cracking catalyst according to claim 10, wherein the pore volume of mesopores having a pore size of 4-50 nm in the catalytic cracking catalyst accounts for 65-85% of the total pore volume.

13. A method for the preparation of the catalytic cracking catalyst according to any one of claims 10-12 using the composition according to any one of claims 4-9, comprising the following steps:
(1) a large-particle-size sol is prepared in the following steps:
(1a) an aluminum source and deionized water are mixed and stirred at room temperature for more than 30 minutes to obtain a first slurry, which has a solid content of 5-25 wt.%;
(1b) the first slurry and a phosphorus source are mixed and stirred at a temperature not higher than 60 °C for more than 30 minutes to obtain a second slurry, which has a solid content of 15-50 wt.%;
(1c) a silica sol is added into the second slurry, mixed and stirred at a temperature not higher than 60 °C for more than 30 minutes to obtain a third slurry, which has a solid content of 15-50 wt.%;
(1d) the third slurry is set aside at 20-60 °C for 1-72 hours to carry out aging treatment to obtain the large-particle-size sol;
wherein the mass ratio of the amount of the phosphorus source calculated as P₂O₅ to the amount of the aluminum source is (1.5-5.0): 1, and the mass ratio of the amount of the silica sol calculated as SiO₂ to the amount of the aluminum source calculated as Al₂O₃ is (0.01-0.3): 1;
(2) clay, beta zeolite and/or ZSM-5 zeolite and the large-particle-size sol are mixed uniformly to obtain a fourth slurry, which has a solid content of 10-50 wt.%; the fourth slurry is spray-formed, dried and calcined to obtain said catalytic cracking catalyst, wherein, on a dry basis weight, the weight ratio of the beta zeolite, the clay, and the large particle size sol is (15-50):(10-75):(10-50); or on a dry basis weight, the weight ratio of the ZSM-5 zeolite, the clay, and the large particle size sol is (20-50): (10-70): (10-45).

14. The method according to claim 13, wherein in step (1a), the mixing and stirring lasts for 30-60 minutes.

15. The method according to claim 13, wherein step (1b) is carried out at a temperature of 35-55°C, and the mixing and stirring lasts for 30-90 minutes.

16. The method according to claim 13, wherein step (1c) is carried out at a temperature of 35-55°C, and the mixing and stirring lasts for 30-90 minutes.

17. The method according to claim 13, wherein, the aluminum source is one or more selected from the group consisting of pseudo-boehmite, alumina, boehmite, gibbsite, and diaspore; the phosphorus source is one or more selected from phosphoric acid, phosphorous acid, and hypophosphoric acid; the clay is one or more selected from the group consisting of kaolin, rectorite, diatomite, montmorillonite, bentonite, and sepiolite.

18. The method according to claim 13, wherein the beta zeolite is selected from the group consisting of H-type beta zeolite, Na-type beta zeolite, phosphorus-modified beta zeolite and metal modified beta zeolite or any combination thereof, wherein the molar ratio of SiO₂ to Al₂O₃ in the beta zeolite is 20-50; and the ZSM-5 zeolite is selected from the group consisting of HZSM-5 zeolite, ZSM-5 zeolite comprising phosphorus and/or iron, ZSM-5 zeolite comprising phosphorus and/or rare earth, modified ZSM-5 zeolite or any combination thereof; wherein the modified ZSM-5 zeolite is selected from the group consisting of Zn, Cu, Mg, Zr, Ti or B modified ZSM-5 zeolite.

19. A large-particle-size sol comprising, based on its dry weight, 10-40 wt.% of Al₂O₃, 50-85 wt.% of P₂O₅, and 0.2-10 wt.% of SiO₂, wherein the P₂O₅:Al₂O₃ mass ratio is (1.5-5.0): 1, and the SiO₂:Al₂O₃ mass ratio is (0.01-0.3): 1, wherein the average particle size of the large-particle-size sol is 20-50 nm and it is prepared in the following method:
(1a) an aluminum source and deionized water are mixed and stirred at room temperature for more than 30 minutes to obtain a first slurry, which has a solid content of 5-25 wt.%;
(1b) the first slurry and a phosphorus source are mixed and stirred at a temperature not higher than 60 °C for more than 30 minutes to obtain a second slurry, which has a solid content of 15-50 wt.%;
(1c) a silica sol is added into the second slurry, mixed and stirred at a temperature not higher than 60 °C for more than 30 minutes to obtain a third slurry, which has a solid content of 15-50 wt.%;
(1d) the third slurry is set aside at 20 to 60 °C for 1-72 hours to carry out aging treatment to obtain the large-particle-size sol.
